# EUROPEAN PATENT APPLICATION

(11) **EP 2 371 779 A1**
(43) Date of publication of application: **05.10.2011**
(21) Application number: 10003460.2
(22) Date of filing: 30.03.2010
(51) Int. Cl.: C03C 21/00, C03C 15/00

(54) **Method for producing flat glass and glass pane produced according to this method**

(71) Applicant: Linde AG, 80331 München (DE)
(72) Inventor: Carney, Stephen, 81245 München (DE); Reiss, Werner, 83075 Bad Feilnbach (DE)
(74) Representative: Kasseckert, Rainer

(57) **Abstract**

The invention relates to a method for producing flat glass comprising the steps of:
- melting a glass composition to form a glass melt,
- forming the glass melt to flat glass in form of a glass ribbon,
- conveying the flat glass into an annealing chamber for annealing the flat glass,

wherein during forming the glass ribbon or before or during or directly after said annealing of said flat glass at least one surface of said flat glass is treated with a gas either for exchanging smaller mass ions by larger mass ions in a surface layer of the flat glass or for reactively removing sodium ions from the surface layer of the flat glass.

## Description

The invention relates to a method and a device for producing flat glass and modifying the surface properties of flat glass.

Flat glass manufacturing can be considered to include rolled glass, patterned glass, drawn glass, figured glass and float glass manufacturing.

The basic process for the production of flat glass is described in the patent of L. A. B. Pilkington et al. US 2,911,759 according to which a flat glass is produced in ribbon form. A ribbon is formed of molten glass. The ribbon is cooled to an extent sufficient to make it stiff enough to stabilise its dimensions and thereafter the ribbon is directed onto a bath of molten tin. The ribbon is floated and continuously advanced on the tin bath, wherein the surface of the ribbon is softened and then progressively and sufficiently cooled before leaving the bath.

There are numerous of improvements of this basic process. Particularly, there are different processes for finishing flat glass. In US 3,284,181 a method is disclosed according to which a cooled and washed flat glass ribbon is treated with an aqueous acid solution of a fluorine containing compound for removing a surface layer of the glass ribbon by means of etching. It has been found that tin or tin compounds are present in the flat surface and this can cause an iridescent layer.

All known solutions for removing tin impurities from the glass surface take place as finishing steps.

Furthermore, from J. Yoo et al.; "Black surface structures for crystalline silicon solar cells", Materials Science and Engineering B 159-160 (2009) 333-337 it is known that the efficiency of solar cells can be improved by a front surface texturing by wet or dry etching. With random reactive ion etching (RIE) techniques an anti reflection coating is achieved on the surface of solar cells. A SF₆/O₂ RIE process is used for texturing of silicone. In SF₆/O₂ plasma etching, SF₆ gas is used to intentionally form F radicals to etch the silicone by producing volatile SiF₄. Also oxygen produces O* radicals for passivation of the silicone sidewall surface with SiₓO_{y}F_{z} which helps to control etched profiles.

All known solutions for modifying the surface are performed off-line on individual pieces of flat glass or other materials.

It is known to toughen or temper glass by means of controlled thermal or chemical treatments to increase its strength compared with normal glass. Toughened or tempered glass can be made from annealed glass via a thermal tempering process. The glass is heated below its softening temperature and then cooled with forced air drafts while the inner portion remains free to flow for a short time. In tempering of glass the cooling is more rapid than in toughening of glass.

By toughening and tempering glass balanced internal stresses are created which give the glass strength. The greater contraction of the inner layer during manufacturing induces compressive stresses in the surface of the glass balanced by tensile stresses in the body of the glass. It is this compressive stress that gives the toughened glass an increased strength.

Annealed glass with internal stress removed must be cut and/or edged and/or drilled before thermal toughening or thermal tempering. Toughened glass is used when strength, terminal resistance and safety are important considerations. The most commonly accounted tempered glass is that used for side and rear windows and automobiles, used for its characteristic of shattering into small cubes rather then large shards.

The chemical process for producing toughened glass involves forcing a surface layer of glass into compression by ion exchange of the sodium ions in the glass surface with larger potassium ions, by e.g. emersion of the glass into a bath of molten potassium nitrate. Chemical toughening results in increased toughness compared with thermal toughening, and can be applied to glass objects of complex shape. The following documents discuss certain aspects of chemical toughening of glass:
- H. Yunqiu et al., "Mechanical strength improvement of glass by ion exchange in the solid state" Journal of Non-Cristalline Solids 80 (1986) 283-291, North-Holland, Amsterdam,
- K.K. Mallick et al., "Strengthening of container glasses by ion-exchange dip coating", Journal of non-crystalline solids 351 (2005) 2524-2536;
- J. Shen et al.; "Effect of the K/Na ratio in mixed-alkali lime silicate glasses on the rheological and physical properties", Journal of Non-Crystalline Solids 344 (2004) 66-72
- K. Kamada et al.; "Crack-free lithium ion injection into alkali silicate glass using Li+ conduction microelectrodes", Solid state ionics 176 (2005) 1073-1078;
- B. Samuneva et al.; "Interaction between glasses and alkali metal vapours", Journal of non-cristalline solids 112 (1989) 385-391 North-Holland, Amsterdam.

A glass composition which is particularly suitable for a chemical toughening operation is disclosed in US 6,333,285 B1.

US 4,218,230 discloses a method of glass strengthening by ion exchange. An aqueous solution containing tripotassium or dipotassium phosphate is sprayed on the glass while it is in a heated condition so that the water flashes off leaving the potassium salt deposited on the hot glass surface.

From EP 2 075 237 A1 it is known to ion-exchange K₂O in a KNO₃ molten salt for a Li₂O and Na₂O component in a glass substrate for forming a compression stress layer.

Tsutsumi, K. et al. describes in "Characteristics of swelling of sodium-potassium ion-exchange glass waveguides", Electronic Letters, Volume 22, issue 24, November 20 1986, pages 1299 - 1300.

D.I. Lee et al. discloses in "Effects of silver and potassium ion exchange in flat glass", Journal of Material Science, Volume 27 (1992), pages 2908 - 2982.

All of these methods are applied to finished products that are handled as individual items in off-line processes.

All the above mentioned documents relating to toughening and/or tempering are incorporated by reference.

The object of the present invention is to provide a method for producing efficiently glass with good weathering properties and good mechanical strength.

The object is solved by a method according to claim 1. Advantageous embodiments of the invention are characterized in the subclaims.

The method for producing flat glass according to the present invention comprises the steps of:
- melting a glass composition to form a glass melt,
- forming the glass melt to flat glass in form of a glass ribbon,
- conveying the flat glass into an annealing chamber for annealing the flat glass,
wherein during forming the glass ribbon or before or during or directly after said annealing of said flat glass at least one surface of said flat glass is treated with a gaseous or liquid stream either for exchanging smaller mass ions by larger mass ions in a surface layer of the flat glass or for reactively removing sodium ions from the surface layer of the flat glass.

The flat glass is treated with a gaseous or liquid stream either for exchanging smaller mass ions by larger mass ions in a surface layer of the flat glass or for reactively removing sodium ions from the surface layer of the flat glass during forming the glass ribbon or before or during or directly after the annealing of the flat glass. This surface treatment makes use of the glass temperature during the production process for producing flat glass so that in comparison to ordinary methods less additional heat is required to achieve the ion exchange reactions or the chemical reactions for the removing sodium ions in the allotted process time.

According to the invention the flat glass is treated with a gaseous stream or a liquid stream or both. The gaseous and/or liquid stream might further comprise particulate material. That is, particles are sprayed or subjected to the surface of the flat glass by means of the gaseous or liquid stream or flow.

With this treatment the concentration of "smaller ions", in particularly the concentration of sodium ions or lithium ions or magnesium ions, in the treated surface layer of the flat glass is reduced.

The reduction of a reduced concentration of sodium ions results in an increase of the stress in the layer which improves the overall strength of the flat glass. This is particularly effective if the sodium and/or lithium and/or magnesium ions are exchanged by larger mass ions e.g. potassium ions and/or silver ions.

The reduction of the concentration of sodium ions in the surface layer also improves the weathering resistance of the flat glass by reducing the incidence of sodium hydroxide reactions at the surface of the flat glass.

This treatment is particularly advantageous applied on the surface of a flat soda-lime-silicate glass because such flat soda-lime-silicate glass has usually a micro-thin surface layer in which sodium ions are concentrated at levels higher than in the bulk glass. This high concentration of sodium ions in the micro-thin surface layer can be reduced to a concentration level or below the concentration level of the bulk glass.

Such a surface layer with a reduced sodium concentration is particularly advantageous for using the flat glass as substrate for electrical devices such as photovoltaic cells. Due to the migration of sodium ions the function of electronic contacts and electronic layers, particularly thin film layers, can be interfered. Due to the reduced concentration of sodium ions in the surface layer according to the present invention the migration of sodium ions is significantly reduced and the disturbance of electrical devices due to the migration of sodium ions is significantly reduced. Furthermore, the reduced sodium ion transfer secures that the rate of loss of photovoltaic cell efficiency over the lifetime of a photovoltaic cell and the loss of efficiency of coatings used on an architectural solar glass is avoided.

Due to the temperature of the flat glass during its production process the exchanging of ions and/or the chemical reactions between the ions and the glass are enhanced. Thus, according to one embodiment the gaseous or liquid stream is heated to a temperature in the range of about 400 °C to 900°C.

However, the inventive treatment shall be carried out at a stage where the flat glass is not too hot, because the hotter the flat glass is, the more likely the surface layer will relax and reduce the internal stresses. Such a relaxation would reduce the mechanical strength of the flat glass. Therefore, the upper limit of the temperature of the flat glass shall be in the range between 400 °C and 50 °C above the glass transition temperature during the treatment for achieving an optimal mechanical strengthening.

The glass transition temperature is the temperature at which liquid glass changes to an amorphous structure. Different operational definitions of the glass transition temperature exist. In this application the glass transition temperature shall mean the transition temperature based on a measurement of the energy release on heating in differential scanning calorimetry (DSC). The glass transition temperature depends on the cooling rate, molecular weight distribution and can be influenced by additives.

If the treatment according to the present invention is carried out in the tin bath zone, then the gaseous waste should be evacuated from the tin bath zone to keep this gaseous waste as separate as possible from an inert atmosphere in the tin bath zone.

Preferably, the gaseous or liquid stream is created by melting KO₂. Hydrogen can be supplied to burn the oxygen. Other suitable compositions for producing the gaseous or liquid stream or flow are KOH or KNO₃.

The reactively removing of sodium ions from the surface layer of the flat glass can be carried out by means of a gas containing fluorine so that the fluorine reacts with sodium to NaF which is deducted.

The invention is explained in more detail by means of the accompanying drawings. In the drawings it is shown in:
Fig. 1 a production site for producing flat glass in a simplified illustration, and

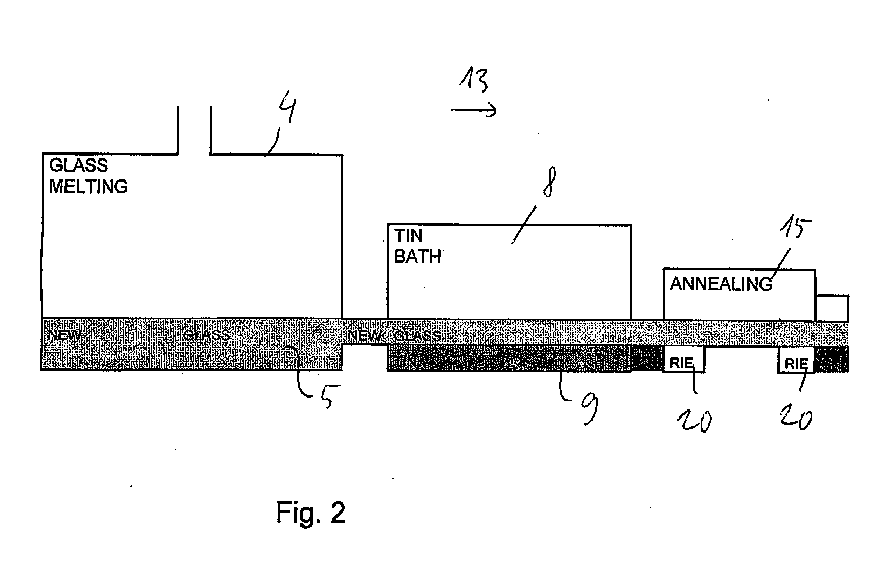

Fig. 2 schematically the flat glass production with a treatment unit for applying a gaseous or liquid flow onto a glass ribbon.

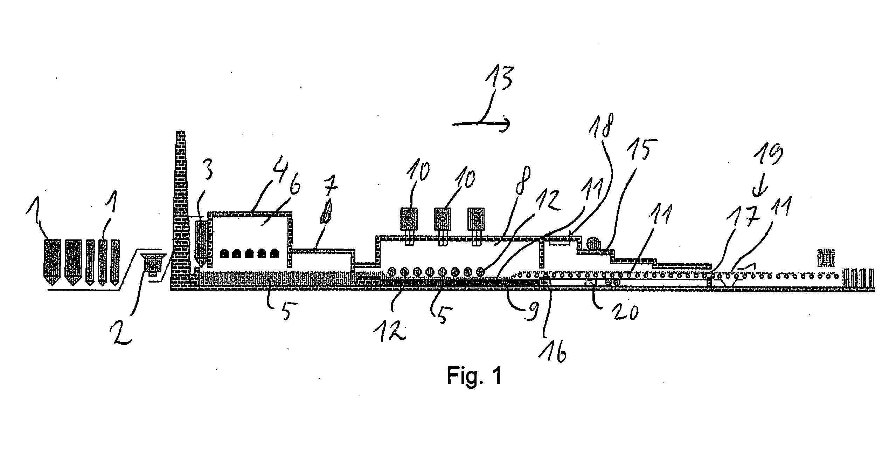

Fig. 1 shows in a simplified illustration a production site for producing flat glass which is suitable for carrying out the present invention. The production site comprises containers 1 for storing raw material for the glass production. The raw material is mixed to a batch and collected in a batch container 2. From the batch container 2 the batch is conveyed to a charging silo 3 for charging a glass furnace 4 with the batch. The furnace is heated to a temperature above 1200°C for melting the batch to molten glass 5. Preferably, the molten glass is a soda lime glass. Then the temperature of the furnace 4 is adjusted to at least 1500°C.

The molten glass 5 flows from a melting chamber 6 in the furnace to a discharge chamber 7 and from the discharge chamber 7 of the glass furnace 4 into a tin bath chamber 8. The tin bath chamber 8 comprises a bath with molten tin or with a molten tin alloy 9. The tin bath chamber 8 comprises heating elements 10 for providing a certain temperature profile.

A ribbon of molten glass 5 is floating on the molten tin 9, wherein the ribbon of glass is formed on the molten tin to a flat and smooth float glass which is a certain kind of flat glass 11. In the tin bath chamber 8 rollers 12 are provided which are in contact with the upper surface of the flat glass 11. The rollers 12 are driven for moving the flat glass in a transportation direction 13. At the end of the tin bath chamber 8 the flat glass 11 is picked up by conveyer mechanism which usually comprises a plurality of rollers 14. By means of this conveyor mechanism the flat glass 11 is transported through an annealing lehr 15. The annealing lehr 15 comprises an entrance 16 through which the flat glass 11 enters the annealing lehr 15 and an exit 17 through which the flat glass 11 leaves the annealing lehr 15. The annealing lehr 15 comprises a heating element 18 which provides a temperature profile which varies in transportation direction 13. At the entrance 16 the temperature is about 600°C, wherein at the exit 17 the temperature is reduced to about 200°C. At the exit the flat glass 11 is cooled down to a temperature of about 200°C. The flat glass 11 is then conveyed to a cutting line 19 in which the ribbon of the flat glass 11 is cut in separate glass panes. Further processing stations for bending, grinding, drilling, tempering and toughening can follow.

In the process between the end of the forming process of the ribbon and the end of the annealing lehr 15 an application unit 20 is provided beneath a transportation path of the flat glass 11.

The application unit 20 of the present embodiment comprises a gas generator for melting and vaporizing KO₂. This gas is heated to form a plasma containing K⁺-ions. Furthermore, hydrogen to burn the oxygen are added. This plasma-gas is directed to a surface of the flat glass. Potassium ions replace smaller mass ions, e.g. sodium ions and/or lithium ions and/or magnesium ions. Due to the larger size of the potassium ions a compression stress layer is formed in the flat glass. The thickness of this potassium doped surface layer is in the range of about 25 µm to 30 µm.

If the application unit is arranged in the tin bath zone, then it is advantageous to provide an exhaust hood beneath the application unit to deduct the gaseous waste. This exhaust hood deducts the gaseous waste and secures that the inert atmosphere above the tin bath is not disturbed.

In this embodiment the gas is applied in form of plasma gas. However, if the temperature of the flat glass is high enough it is not necessary to apply the gas as plasma gas.

In the above described embodiment smaller mass ions are exchanged by larger mass ions in the surface layer of the flat glass.

In another embodiment it is possible to apply a gas or a liquid comprising a reactive component, e.g. F₂. The fluorine reacts with the sodium or other ions in the surface layer of the flat glass. The reaction product is a gas which can be deducted, so that ions are removed from the surface layer of the flat glass. If the flat glass is sufficiently hot, then it is even not necessary to heat the reactive gas to carry out the chemical reaction.

With the reactive gas treatment a surface layer with a reduced concentration of potassium ions is achieved having a thickness of about 5 µm to 10 µm.

Therefore, a higher mechanical strength is achieved with the ion exchanging treatment in comparison to the treatment with the reactive gas.

In the above described embodiment the application unit is only arranged below the transportation path of the flat gas for treating the lower surface of the flat glass. Preferably, the application unit is provided on both sides of the transportation path, so that both the upper surface as well as the lower surface are treated with the gas.

The preferred glass composition is a soda-lime glass, particularly soda-lime-silicate glass.

As surface treatment of the glass is done in-line of the production process of flat glass, the temperature of the flat glass in the tin bath zone or rolling zone - if the glass is rolled - or before or in the annealing lehr 15 or directly after the annealing lehr 15 is used for enhancing either the ion exchange reaction and/or the chemical reaction. The optimum temperature can be selected by placing the application unit 20 at the position of the transportation path where the optimum temperature is set by the temperature profile of the process line, in particularly of the annealing layer.

In the above described example of the invention the flat glass is a float glass which is produced by means of floating on a tin bath. The present invention can also be used in the production of other types of flat glass including rolled glass, patterned glass, drawn glass, and figured glass.

Furthermore, the flat glass can be subjected to a further toughening by heating and cooling the flat glass.

The following documents disclose aspects and methods for chemically toughening which can be applied for the present production process of flat glass:
- H. Yunqiu et al., "Mechanical strength improvement of glass by ion exchange in the solid state" Journal of Non-Cristalline Solids 80 (1986) 283-291, North-Holland, Amsterdam,
- K.K. Mallick et al., "Strengthening of container glasses by ion-exchange dip coating", Journal of non-crystalline solids 351 (2005) 2524-2536;
- J. Shen et al.; "Effect of the K/Na ratio in mixed-alkali lime silicate glasses on the rheological and physical properties", Journal of Non-Crystalline Solids 344 (2004) 66-72
- K. Kamada et al.; "Crack-free lithium ion injection into alkali silicate glass using Li+ conduction microelectrodes", Solid state ionics 176 (2005) 1073-1078;
- B. Samuneva et al.; "Interaction between glasses and alkali metal vapours", Journal of non-cristalline solids 112 (1989) 385-391 North-Holland, Amsterdam;
- Tsutsumi, K. et al. describes in "Characteristics of swelling of sodium-potassium ion-exchange glass waveguides", Electronic Letters, Volume 22, issue 24, November 20 1986, pages 1299 - 1300;
- D.I. Lee et al. discloses in "Effects of silver and potassium ion exchange in flat glass", Journal of Material Science, Volume 27 (1992), pages 2908 - 2982;
- US 4,218,230.

In the present invention one or more of these known processes are used to achieve chemical toughening of the flat glass during the manufacturing process while the glass is still in ribbon form. Instead of or in addition to applying a gaseous stream to the surface of the flat glass it is also possible to treat the surface with a liquid stream. For example, KNO₃ + H₂O could be applied to the flat glass surface. Further, it is possible to add particles to the gaseous and/or liquid flow or stream. Such particles could be salts, in particular KNO₃.

The flat glass produced according to the present invention is particularly suitable as substrate or a cover plate or a base plate for solar modules. Solar modules using such a substrate or cover plate or base plate can achieve a longer lifetime, a higher efficiency due to the reduced sodium concentration.

The flat glass produced according to the above described procedure is made with a thickness of 3.2 mm. It is intended to reduce the thickness to 2.0 to 2.4 mm while achieving the same or better mechanical properties as available from ordinary thicker glass.

List of references
- 1: container
- 2: batch container
- 3: charging silo
- 4: glass furnace
- 5: molten glass
- 6: melting chamber
- 7: discharge chamber
- 8: tin bath chamber
- 9: molten tin/molten tin alloy
- 10: heating elements
- 11: flat glass
- 12: roller
- 13: transportation direction
- 14: roller
- 15: annealing lehr
- 16: entrance
- 17: exit
- 18: heating element
- 19: cutting line
- 20: application unit
- 21: recess

## Claims

1. Method for producing flat glass comprising the steps of:
- melting a glass composition to form a glass melt,
- forming the glass melt to flat glass in form of a glass ribbon,
- conveying the flat glass into an annealing chamber for annealing the flat glass,
wherein during forming the glass ribbon or before or during or directly after said annealing of said flat glass at least one surface of said flat glass is treated with a gaseous or liquid stream either for exchanging smaller mass ions by larger mass ions in a surface layer of the flat glass or for reactively removing sodium ions from the surface layer of the flat glass.

2. Method according to claim 1,
wherein lithium and/or sodium and/or magnesium ions are exchanged by potassium and/or silver ions.

3. Method according to claim 1 or 2,
wherein the gaseous or liquid stream is applied with a temperature in the range of about 400°C to 900°C.

4. Method according to claim 3,
wherein the gaseous or liquid stream is created by melting or dissolving KO₂ or KOH or KNO₃.

5. Method according to claim 4,
wherein hydrogen is supplied to the gas for burning oxygen.

6. Method according to claim 1
wherein the reactively removing off sodium ions from the surface layer of the flat glass is carried out by means of a gas containing flourine so that the flourine reacts with sodium to NaF which is deducted.

7. Method according to one of the claims 1 to 6,
wherein the temperature of the flat glass during the treatment of the surface of the flat glass lies in the range of about 400 °C to 50 °C above the glass transition temperature.

8. Method according one of the claims 1 to 7,
wherein the glass ribbon is formed either by pouring the glass melt on a bath of molten tin or by rolling the glass melt.

9. Method according to claim 8,
wherein, if the glass ribbon is formed by pouring the glass melt on a bath of molten tin, then the gaseous waste resulting from the treatment of the surface of the flat glass is separated from the atmosphere above the bath of molten tin.

10. Method according to any one of the claims 1 to 9,
wherein the flat glass (11) is made of soda-lime-silicate glass.

11. Method according to one of the claims 1 to 10,
wherein particulate material is sprayed to said surface of said flat glass by means of said gaseous or liquid stream.

12. Method according to one of the claims 1 to 11,
wherein the flat glass is tempered by heating just below its softening temperature of the flat glass (11) and by cooling the flat glass (11) immediately after the heating, wherein the tempering is carried out after the application of the gas for ion exchanging or for removing reactively sodium.

13. Glass pane,
wherein the glass pane is produced by the method according to one of the claims 1 to 10 and the glass pane has a thickness of not more than 3.2 mm and preferably not more than 2.4 mm.

14. Electronic device having a substrate which is as glass pane being produced according to the method of one of the claims 1 to 12 and wherein on the surface treated with said gas an electronic layer is provided.

15. Electronic device according to claim 14, wherein the electronic layer is a thin film solar cell.
